# EUROPÄISCHE PATENTSCHRIFT

(11) **EP 2 598 313 B1**
(45) Veröffentlichungstag und Bekanntmachung des Hinweises auf die Patenterteilung: **12.08.2015**
(21) Anmeldenummer: 11779556.7
(22) Anmeldetag: 19.05.2011
(51) Int. Cl.: B29C 67/00

(54) **VERFAHREN UND VORRICHTUNG ZUM HERSTELLEN EINES DREIDIMENSIONALEN BAUTEILS**
METHOD AND APPARATUS FOR PRODUCING A THREE-DIMENSIONAL COMPONENT
PROCÉDÉ ET DISPOSITIF DE FABRICATION D'UN COMPOSANT TRIDIMENSIONNEL

(30) Priorität: 28.07.2010 DE 202010010771 U
(43) Veröffentlichungstag der Anmeldung: 05.06.2013
(73) Patentinhaber: CL Schutzrechtsverwaltungs GmbH, 96215 Lichtenfels (DE); Katholieke Universiteit Leuven, 3000 Leuven (BE)
(72) Erfinder: HERZOG, Frank, 96215 Lichtenfels (DE); BECHMANN, Florian, 96215 Lichtenfeld (DE); BERUMEN, Sebastian, 96179 Mürsbach (DE); KRUTH, Jean, Pierre, B-3001 Leuven (BE); CRAEGHS, Tom, B-3001 Heverlee (BE)
(74) Vertreter: Hafner, Dieter
(86) Internationale Anmeldenummer: PCT/DE2011/001088
(87) Internationale Veröffentlichungsnummer: WO 2012/019577

(56) Entgegenhaltungen:
- WO-A1-2007/147221
- DE-A1-102007 056 984
- DE-C1- 10 007 711

## Beschreibung

Die Erfindung betrifft ein Verfahren zum Herstellen eines dreidimensionalen Bauteils durch ein Laserschmelzverfahren, bei welchem das Bauteil durch aufeinanderfolgendes Verfestigen einzelner Schichten aus durch Einwirkung einer Strahlung verfestigbarem Baumaterial durch Aufschmelzen des Baumaterials erfolgt, mit den weiteren Merkmalen des Oberbegriffes des Anspruches 1.

Darüber hinaus betrifft die Erfindung noch eine Vorrichtung zur Durchführung dieses Verfahrens sowie die Verwendung einer Visualisierungseinrichtung zur zwei- oder mehrdimensionalen vorzugsweise 2D- oder 3D-Darstellung von Bauteilbereichen von generativ durch Strahlungseinwirkung auf pulverartiges Baumaterial hergestellten Bauteilen hinsichtlich ihrer Bauteilqualität.

### Stand der Technik

Aus WO 2007/147221 sind ein Verfahren gemäß dem Oberbegriff des Anspruchs 1 und eine Vorrichtung gemäß dem Oberbegriff des Anspruchs 12 zur Beobachtung und zum Kontrollieren eines selektiven Laserschmelzbauvorganges bekannt. Die dargestellte Vorrichtung zur selektiven Laserpulververarbeitung umfasst eine Bauplattform mit einem Pulverbett, ein Pulverbeschichtungssystem zum Auftragen einer Pulveroberfläche auf die Bauplattform, einen Laser, dessen fokussierter Laserstrahl auf die Pulveroberfläche trifft und innerhalb einer Schmelzzone ein Schmelzen des Pulvers verursacht. Der Laserstrahl wird mit einer Scannervorrichtung über die Pulveroberfläche gelenkt. Darüber hinaus ist ein Detektor zum Erfassen elektromagnetischer Strahlung vorgesehen, die von der Pulveroberfläche abgegeben oder reflektiert wird und die mit einem optischen System zusammenwirkt, das dem Laserstrahl folgt und zur Führung der Strahlung in Richtung des Detektors geeignet ist.

Der Detektor der bekannten Vorrichtung ist derart ausgebildet, dass er die elektromagnetische Strahlung erfassen kann, die von einem beweglichen Beobachtungsbereich auf der Pulveroberfläche abgegeben oder reflektiert wird, wobei der bewegliche Beobachtungsbereich größer ist wie der minimale Laserfleck des Laserstrahls. Dadurch kann der Schmelzepool erfasst werden, der im Pulverbett erzeugt wird.

Über den Detektor kann die Größe der Schmelzzone, insbesondere die Länge und Breite und ein Längen zu Breite Verhältnis ermittelt werden. Darüber hinaus können aus dem elektromagnetischen Spektrum der vom Schmelzepool emittierten Strahlung spezifische Teile selektiert werden.

Der Erfindung liegt die Aufgabe zugrunde, ein Verfahren mit den Merkmalen des Oberbegriffes des Anspruches 1 sowie eine zugehörige Vorrichtung zur Durchführung des Verfahrens derart weiterzubilden, dass die mit ihr erfassten Werte einfacher ausgewertet werden können. Diese Aufgabe wird dadurch gelöst, dass die zur Evaluierung der Bauteilqualität erfassten Sensorwerte zusammen mit den die Sensorwerte im Bauteil lokalisierenden Koordinatenwerte abgespeichert und mittels einer Visualisierungseinrichtung in 2D oder 3D-Darstellung bezogen auf ihren Erfassungsort im Bauteil dargestellt werden.

Mit anderen Worten wird die Aufgabe dadurch gelöst, dass die zur Evaluierung der Bauteilqualität erfassten Sensorwerte zusammen mit den die Sensorwerte im Bauteil lokalisierten Koordinatenwerten abgespeichert und mittels einer Visualisierungseinrichtung in zwei- und/oder mehrdimensionalen Darstellungen bezogen auf ihren Erfassungsort im Bauteil dargestellt werden. Die Sensorvorrichtung kann vorzugsweise hinsichtlich der Abmessung, Form und/oder Temperatur der im Schmelzbereich detektierten Auswirkungen des punkt- und/oder linienförmigen Energieeintrags erfassen.

In einer bevorzugten Ausführungsform werden bei einer 2D-Darstellung Sensorwerte einer Bauteilebene dargestellt, die einer Schicht entsprechen, die von einer Neubeschichtung mit Baumaterial durch Strahlungseinwirkung verfestigt wird. Insbesondere ist es vorteilhaft, wenn bei einer 2D-Darstellung Sensorwerte einer frei wählbaren Bauteilschnittebene dargestellt werden, die winkelig (z.B. rechtwinklig oder einem Winkel unter 30°) zu einer durch Strahlungseinwirkung sukzessiv verfestigten Schicht verläuft. Insbesondere kann die Schnittebene sowohl in ihrem Winkel als auch in ihrer Lage innerhalb des fiktiven Bauraums auf dem Bildschirm der Visualisierungseinrichtung frei wählbar sein, ähnlich wie dies auch bei handelsüblichen 2D- /3D-CAD-Computerprogrammen üblich ist

Ferner ist es vorteilhaft, wenn bei einer zwei- und/oder mehrdimensionalen Darstellung ausschließlich Sensorwerte visuell dargestellt und/oder hervorgehoben werden, die Bauteilbereiche repräsentieren, die gegenüber wenigstens einem einen festlegbaren (vordefinierten) Sollverfestigungsgrad oder Solltemperaturwert oder Solldichtewert einen abweichenden, insbesondere reduzierten Verfestigungsgrad oder Temperaturwert oder Dichtewert zeigen. Ebenso ist es möglich, neben dem Verfestigungsgrad, dem Temperaturwert und dem Dichtewert auch einen Sollenergieeintrag und/oder Sollschmelzpoolabmessungen für die Abweichungsdarstellung und/oder Hervorhebung zugrundezulegen.

Die Hervorhebung in diese Bereiche kann beispielsweise durch eine gezielte Wahl unterschiedlicher Farben, Graustufen, Transparenzgrade und/oder hinsichtlich einer Flächenstrukturierung (Schraffurart wie gepunktet, in unterschiedlichen Winkeln jeweils schräg liniert, etc.) erfolgen.

Ferner können die die Sensorwerte im Bauteil lokalisierenden Koordinatenwerte zumindest teilweise die zur Herstellung des Bauteils verwendeten Bauteilkoordinaten sein. Es ist sowohl möglich, die Verortung bzw. die Lokalisierung oder Zuordnung der Sensorwerte zu einem Koordinatenwert sowohl mittels der Verwendung der Baukoordinatenwerte (der Informationen, die dem Bauprozess zugrunde liegen), als auch ausschließlich oder zusätzlich unter Verwendung von während des Bauprozesses mittels weiterer Sensoren detektierter Lokalisierungssensoren vorzunehmen.

In einer weiteren vorteilhaften Ausführungsform erfolgt eine Koordinatenzuordnung der Sensorwerte über Belichtungs- oder Scannerdaten. Zusätzlich oder alternativ kann es auch vorteilhaft sein, wenn bei der flächigen Erfassung der gesamten Bauebene oder des den Bauteilquerschnitt umfassenden Ausschnittes die Koordinaten eines Strahlungs-Energieeintrages der Bauteilebene erfasst und den Sensorwerten zuordnet und die Lage der Bauteilebene (Z-Koordinate) gesondert erfasst wird.

Visualisierungseinrichtungen werden heute in Verbindung mit der Röntgen- und Computertomogramm-Technologie verwendet und dienen in der Regel dazu, Sensorwerte darzustellen, die aufgrund der genannten Verfahren in einem vorhandenen, d.h. fertig vorliegenden Körper messtechnisch erfasst werden.

Die Erfindung setzt erstmalig ein Visualisierungsverfahren und eine zugehörige Visualisierungsvorrichtung (Software) in Verbindung mit einem generativen Herstellungsverfahren ein und wird dazu verwendet, beim Bauvorgang im Schmelzepool erfasste Werte griffiger darzustellen, um unmittelbar nach Fertigstellung und/oder noch während des Bauvorganges einer Bedienungsperson einer derartigen Laserschmelzanlage Aufschluss darüber zu geben, ob die verfestigten Bauteilschichten den an das Bauteil gestellten Anforderungen hinsichtlich Aufschmelzung, Temperaturverlauf, Werkstückfestigkeit etc. zu genügen. Sollte ein generativ hergestelltes Bauteil sich nicht als fest genug erweisen und irgendwann später Anlass zur Beanstandung durch einen Benutzer geben, dann können z.B. archivierte bauhistorische Visualisierungsinformationen dazu herangezogen werden, um sehr schnell zu überprüfen, ob z.B. eine Bruchstelle des Werkzeuges entsprechend den Bauvorschriften tatsächlich hergestellt wurde oder ob es Abweichungen nach oben oder unten (z.B. von Toleranzbereichen) gab. Insbesondere dann, wenn innerhalb des Bauteils filigrane Strukturen vorliegen, kann überprüft werden, ob dort der Aufschmelzungsgrad, der Temperaturverlauf nach Wärmesenken, die Bauteildichte und dergleichen so eingestellt waren, dass Bruch vermieden werden sollen. Für zukünftige Bauvorhaben können dann derartige Erkenntnisse dazu herangezogen werden, um Werkstückbruch und/oder Materialversagen zu vermeiden.

Wenn im Anspruch 1 von einer zwei- oder mehrdimensionalen Darstellung gesprochen wird, so bedeutet dies, dass entweder ein zweidimensionales Bild der visualisierten Sensorwerte dargestellt wird, wobei die Sensorwerte in einer Schnittebene, z.B. einer Bauteilebene liegen oder einer Ebene, die winkelig zur Bauebene verläuft oder bei einer 3D-Darstellung das Bauteil gleichsam transparent dargestellt wird und Abgleichungen der Bauteilqualität-basierend auf den ermittelten Sensorwerten und den dazu korrelierten Koordinatenwerten, z.B. Baukoordinatenwerten dargestellt wird.

In Weiterbildung des Verfahrens ist es möglich, bei einer 2D- oder 3D-Darstellung ausschließlich Sensorwerte visuell herauszufiltern, die Bauteilbereiche repräsentieren, die gegenüber einem festlegbaren Sollverfestigungsgrad einen abweichenden, insbesondere reduzierten Verfestigungsgrad haben. Gleiches gilt natürlich auch für Darstellungen beispielsweise der Schmelztemperatur, der Dichte und dergleichen.

Dabei kann ein optimierter Wert in einer ersten Farbe, Graustufe und/oder Flächenstrukturierung dargestellt werden und bezogen auf diesen optimierten Wert nach unten oder oben abweichende Werte farblich, hinsichtlich des Grauwertes bzw. hinsichtlich der Flächenstruktur (z.B. der Schraffurart) unterschiedlich dargestellt werden. Dies ermöglicht es einem Betrachter eines solchen 2D- oder 3D-Bildes sofort Erkenntnisse darüber zu gewinnen, ob der Bauvorgang optimal abgelaufen ist oder das Bauteil unter Umständen Schwächen aufweist.

Die die Sensorwerte im Bauteil lokalisierenden Koordinatenwerte können die zur Herstellung des Bauteils verwendeten Baukoordinatenwerte sein. Dies sind die Werte, die dazu herangezogen werden, um den Laserstrahl Ober die Pulveroberfläche zu leiten sowie Werte, die eine Z-Koordinate hinsichtlich der Schichtnummer repräsentieren. Es ist aber auch möglich, die die Sensorwerte im Bauteil lokalisierenden Koordinatenwerte bei der Erfassung der Sensorwerte neu zu gewinnen, d.h. mit einem geeigneten Abtastverfahren die gerade zur Verfestigung anstehende Bauteiloberfläche abzutasten und Werte abzuspeichern, die einen Verfestigungsort (Ort der Energieeintragung in das Pulverbett) in der Schicht entsprechen. Dies kann dadurch geschehen, dass entweder eine flächige Erfassung der gesamten Bauebene erfolgt oder eben nur ein interessierender Ausschnitt der Bauebene erfasst wird, der den Bauteilbereich enthält.

Im Rahmen der Erfindung ist auch vorgesehen, die Sensorwerte nicht unmittelbar im Moment des Energieeintrages zu erfassen, sondern zusätzlich oder alternativ zeitlich versetzt danach. Wird z.B. die Temperatur im Schmelzepool zu einem Zeitpunkt T₀ (beim Energieeintrag) und dann zeitlich danach, z.B. 0,5 Sekunden, 1 Sekunde, 1,5 Sekunden oder dergleichen erfasst, dann lassen sich aus derartigen zu visualisierenden Sensorwerten Aufschlüsse über den Wärmefluss im Bauteil beim Bauvorgang gewinnen, um z.B. bei sehr filigranen Bauteilinnenbereichen Überhitzungserscheinungen zu vermeiden. Derartige zeitlich versetzte Erfassungsverfahren werden z.B. in der Mikroskopie als Sampling Microscope -Verfahren angesprochen.

Die Vorrichtung zur Durchführung des Verfahrens umfasst neben den üblichen Komponenten einer Laserschmelzanlage mit einer Sensorvorrichtung gemäß WO 2007/147221 A1 zusätzlich eine Speichereinrichtung, in welche die zur Evaluierung der Bauteilqualität erfassten Sensorwerte zusammen mit die Sensorwerte im Bauteil lokalisierenden Koordinaten abgespeichert werden und eine mit der Speichereinrichtung verbundene Visualisierungseinrichtung, durch welche die abgespeicherten Sensorwerte in z.B. farblicher oder grau abgestufter 2D- oder 3D-Darstellung bezogen auf ihren Erfassungswert im Bauteil dargestellt werden können.

Die Erfindung ist anhand eines Ausführungsbeispiels in den Zeichnungsfiguren näher erläutert. Diese zeigen
- Fig. 1: eine schematische Darstellung eines koaxialen Überwachungsprozesssystems unter Verwendung zweier Vektoren gemäß dem Stand der Technik;

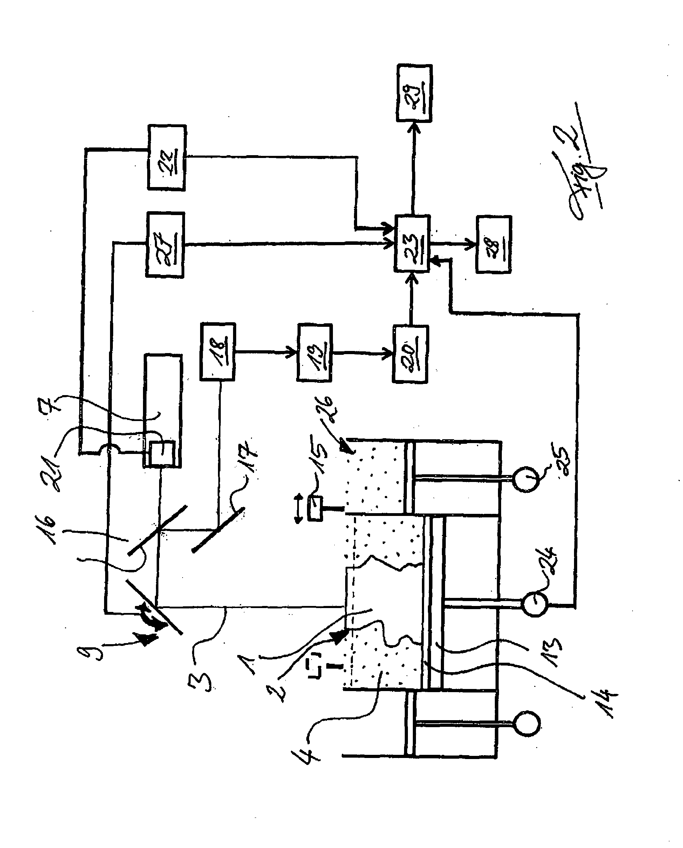

- Fig. 2: eine schematische Darstellung einer typischen selektiven Laserprozessmaschine mit erfindungsgemäßen Mitteln zur Erfassung und Auswertung der Sensorwerte;

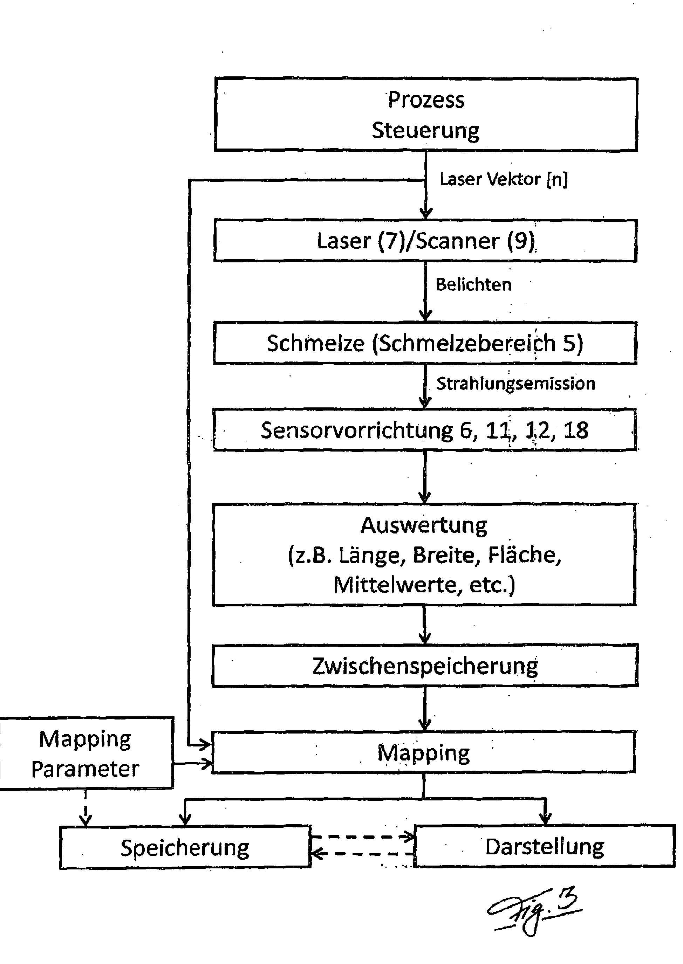

- Fig. 3: ein Flussdiagramm, das wesentliche Prozessabläufe eines bevorzugten erfindungsgemäßen Verfahrens darstellt.

In Zeichnungsfigur 1 ist eine Vorrichtung gemäß dem Stand der Technik dargestellt, wobei diese Vorrichtung ein Verfahren zum Herstellen eines dreidimensionalen Bauteils 1 durch ein Laserschmelzverfahren umfasst. Das Bauteil 1 wird durch aufeinanderfolgendes Verfestigen einzelner Schichten 2 (als Strichlinie angedeutet) aus durch Einwirkung einer Strahlung 3 verfestigbaren Baumaterials 4 durch Aufschmelzen des Baumaterials 4 erreicht. Der durch einen punkt- oder linienförmigen Energieeintrag erzeugte Schmelzbereich 5 wird durch eine Sensorvorrichtung 6 (z.B. Kamera 11 und Fotodiode 12) hinsichtlich seiner Abmessung, Form und/oder Temperatur erfasst und die daraus resultierenden Sensorwerte zur Evaluierung einer Bauteilqualität hergeleitet.

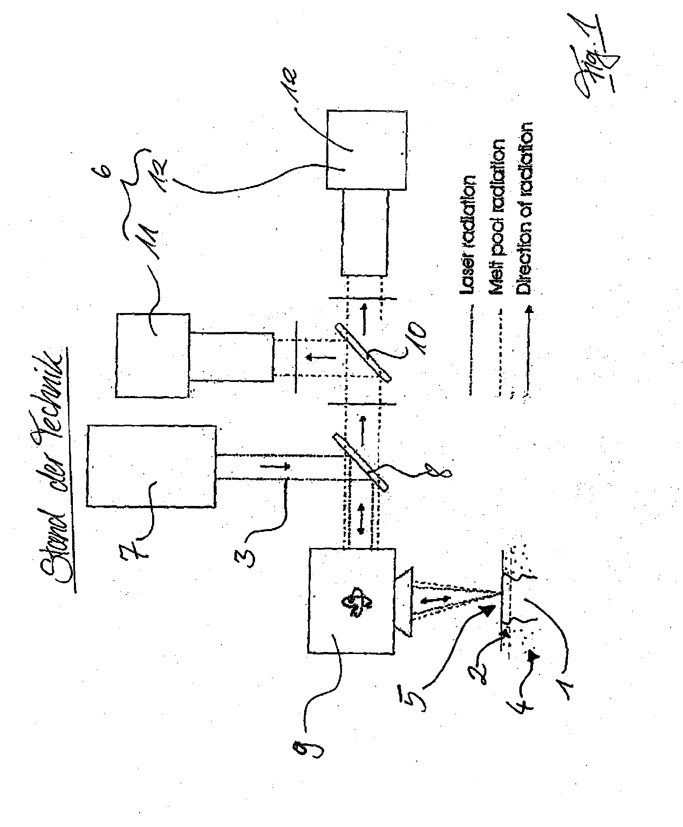

In der dargestellten Ausführung des Standes der Technik gemäß Fig. 1 wird die Strahlung 3 durch eine Laserquelle 7 (Laser) erzeugt. Anschließend über einen halbreflektierenden Spiegel 8 umgelenkt und über einen Scanner 9 mit vorzugsweise einer Fokussierlinse gezielt auf die zu verfestigende Schicht 2 des Baumaterials 4 gelenkt. Die am Schmelzbereich 5 erzeugte Strahlung geht diesen Weg in entgegengesetzter Richtung und durchdringt den halbreflektierenden Spiegel 8 geradlinig, so dass diese auf einen Strahlenteiler 10 gelangt und dort einmal umgelenkt zu einem ersten Detektor, vorzugsweise einer Kamera 11 und den Strahlenteiler 6 geradlinig durchdringend zu einem zweiten Detektor, beispielsweise eine Fotodiode 12 geführt wird.

In Zeichnungsfigur 2 ist nun die Erweiterung des aus dem Stand der Technik bekannten Systems dargestellt. Das im Baubereich auf einen höhenverlagerbaren Träger 13 unter Verwendung einer Basisplatte 14 auf diese aufgebaute Bauteil 1 wird schichtweise (vgl. Schicht 2) im Pulverbett des pulverförmigen Baumaterials 4 aufgebaut. Eine Beschichtereinrichtung 15 transportiert das Baumaterial 4 aus einer Dosierkammer 26 in den Baubereich.

Ausgehend von einem Laser 7 wird die Strahlung 3 nach geradlinigem Durchdringen eines einseitig durchdringbaren Spiegel 16 über den Scanner 9 auf das Bauteil 1 gerichtet. Die vom Bauteil reflektierte Strahlung wird über den Scanner 9 und den in dieser Richtung total reflektierenden Spiegel 16 auf einen weiteren Umlenkspiegel 17 und schließlich zu einem Detektor einer Sensorvorrichtung 6, 11, 12, 18 gelenkt. Dieser Detektor gibt ein Signal an einen Prozessor 19, vorzugsweise einem Mikroprozessor weiter, dessen Output zu einem Speicher 20 gelangt.

Der Laser 7 ist vorzugsweise mit einer Strahlmanipulationseinrichtung 21 versehen, die beispielsweise nach Art einer Modenblende, einem Gitterfilter oder anderer optischer Elemente ausgebildet ist. Diese Strahlmanipulationseinrichtung 21 wird über einen Controller 22 angesteuert, dessen Steuerdaten ebenso wie die im Speicher 20 bevorrateten Prozessordaten des Prozessors 19 in einer Datenverknüpfungs- und/oder Datenzuordnungseinheit 23 zusammenlaufen. Ebenfalls können an der Datenverknüpfungs-/Datenzuordnungseinheit 23 Steuerdaten des Scanners 9 und/oder Steuerdaten bezüglich der Höhenverlagerung des Trägers 13 vorzugsweise über seinen Stellmotor 24 gesammelt und einander zugeordnet werden. Selbstverständlich können auch Steuerdaten des Beschichters der Beschichtereinrichtung 15 und/oder des Zuführmechanismus an Baumaterial zu einer entsprechenden Bauteilschicht 2 (dies wäre beispielsweise mit den Steuerdaten des Stellmotors 25 der Dosierkammer 26 realisierbar), der Datenverknüpfungs-/Datenzuordnungseinheit 23 zugeführt werden. Zwischen dem Scanner 9 und der Datenverknüpfungs-/Datenzuordnungseinheit 23 kann auch ein Steuermodul 27 des Scanners angeordnet sein. Die in der Datenverknüpfungs-/Datenzuordnungseinheit 23 gesammelten, einander zugeordneten Daten (z.B. Datentupel) können dann in einer weiteren Datenverarbeitungsanlage 28 weiterverarbeitet und/oder über ein Darstellungselement 29 visualisiert werden. Statt einer Datenverarbeitungsanlage 28 kann auch eine Schnittstelle für einen Datenspeicher vorgesehen sein. Als Darstellungselement kann sowohl ein Bildschirm, ein Beamer oder ein Holograph verwendet werden.

Schließlich werden die zur Evaluierung der Bauteilqualität erfassten Sensorwerte zusammen mit den die Sensorwerte im Bauteil 1 lokalisierenden Koordinatenwerten abgespeichert und mittels der Visualisierungseinrichtung 29 in zwei- und/oder mehrdimensionalen Darstellungen bezogen auf ihren Erfassungsort im Bauteil 1 dargestellt.

In Zeichnungsfigur 3 ist beispielhaft ein vorteilhafter Prozessablauf des erfindungsgemäßen Verfahrens dargestellt. Die Prozesssteuerung wirkt auf den Laser 7 und/oder den Scanner 9 ein und regelt über den Laservektor [n] die Eigenschaften des Laserstrahls 3. Ausgehend vom Scanner 9 wird das Baumaterial 4 belichtet, wodurch sich eine Schmelze bzw. der Schmelzbereich 5 bildet. Aus dem Schmelzbereich 5 erfolgt eine Emission an Strahlung, die durch die Sensorvorrichtung 6, 11, 12, 18 detektiert wird. Das Ergebnis dieser Detektion führt zu einer Auswertung (z.B. nach Art der Länge, Breite, Fläche etc.), die zu einer Zwischenspeicherung der Auswertung führt. Diese zwischengespeicherte Auswertung wird einem so genannten Mapping unterzogen. Diesem Mapping liegen vorzugsweise definierbare / veränderbare Mappingparameter (Kontrast, Farbe, Detektorwahl, Schwellwertbereiche, etc.) zugrunde. Nach dem Mapping wird dieses über die Visualisierungseinrichtung 29 dargestellt und/oder gespeichert. Hierbei ist es von Vorteil, wenn der Speicherung und/oder der Darstellung auch die Mappingparameter zugrunde liegen, d.h. auch die Mappingparameter gespeichert werden bzw. von der Visualisierungsvorrichtung 29 mit angezeigt werden.

### BEZUGSZEICHENLISTE

- 1: Bauteil
- 2: Schicht
- 3: Strahlung
- 4: Baumaterial
- 5: Schmelzbereich
- 6: Sensorvorrichtung
- 7: Laser
- 8: halbreflektierender Spiegel
- 9: Scanner
- 10: Strahlenteiler
- 11: Kamera
- 12: Fotodiode
- 13: Träger
- 14: Basisplatte
- 15: Beschichtereinrichtung
- 16: Spiegel
- 17: Spiegel
- 18: Sensorvorrichtung
- 19: Prozessor
- 20: Speicher
- 21: Strahlmanipulationseinrichtung
- 22: Controller v. 21
- 23: Datenverknüpfungs-/Datenzuordnungseinheit
- 24: Stellmotor v. 13
- 25: Stellmotor v. 26
- 26: Dosierkammer
- 27: Steuermodul
- 28: Datenverarbeitungsanlage
- 29: Visualisierungseinrichtung

## Patentansprüche

1. Verfahren zum Herstellen eines dreidimensionalen Bauteils (1) durch ein Laserschmelzverfahren, bei welchem das Bauteil (1) durch aufeinanderfolgendes Verfestigen einzelner Schichten aus durch Einwirkung einer Strahlung verfestigbarem Baumaterial (4) durch Aufschmelzen des Baumaterials (4) erfolgt, wobei der durch einen punkt- und/oder linienförmigen Energieeintrag erzeugte Schmelzbereich (5) durch eine Sensorvorrichtung (6, 11, 12, 18) erfasst wird und daraus Sensorwerte zur Evaluierung einer Bauteilqualität hergleitet werden,
**dadurch gekennzeichnet, dass**
die zur Evaluierung der Bauteilqualität erfassten Sensorwerte zusammen mit den die Sensor-Werte im Bauteil (1) lokalisierenden Koordinatenwerten abgespeichert und mittels einer Visualisierungseinrichtung (29) in zwei- und/oder mehrdimensionalen Darstellung bezogen auf ihren Erfassungsort im Bauteil dargestellt werden.

2. Verfahren nach Anspruch 1,
**dadurch gekennzeichnet, dass**
bei einer 2D-Darstellung Sensorwerte einer Bauteilebene dargestellt werden, die einer Schicht (2) entsprechen, die vor einer Neubeschichtung mit Baumaterial (4) durch Strahlungseinwirkung verfestigt wird.

3. Verfahren nach Anspruch 1,
**dadurch gekennzeichnet, dass**
bei einer 2D-Darstellung Sensorwerte einer frei wählbaren Bauteilschnittebene dargestellt werden, die winkelig zu einer durch Strahlungseinwirkung sukzessiv verfestigten Schicht verläuft.

4. Verfahren nach einem der Ansprüche 1 - 3,
**dadurch gekennzeichnet, dass**
bei einer zwei- und/oder mehrdimensionalen Darstellung ausschließlich Sensorwerte visuell dargestellt und/oder hervorgehoben werden, die Bauteilbereiche repräsentieren, die gegenüber wenigstens einem festlegbaren Sollverfestigungsgrad oder-temperaturwert oder -dichtewert einen abweichenden, insbesondere reduzierten Verfestigungsgrad, Temperaturwert oder Dichtewert oder gegenüber einem Soll-Energieeintrag oder Soll-Schmelzepoolabmessungen Abweichungen zeigen.

5. Verfahren nach einem der vorhergehenden Ansprüche,
**dadurch gekennzeichnet, dass**
zur Darstellung der Sensorwerte ein einem optimierten Wert bezogen auf das Baumaterial repräsentierender Sensor-Wert in einer ersten Farbe, ersten Graustufe, ersten Transparenzgrad und/oder ersten Flächenstruktur dargestellt wird und bezogen auf diesen optimierten Wert nach unten oder oben abweichende Werte farblich, hinsichtlich eines Grauwertes, hinsichtlich eines Transparenzgrades und/oder hinsichtlich einer Flächenstruktur unterschiedlich dargestellt werden.

6. Verfahren nach einem der vorhergehenden Ansprüche,
**dadurch gekennzeichnet, dass**
die die Sensor-Werte im Bauteil (1) lokalisierenden Koordinatenwerte zumindest teilweise die zur Herstellung des Bauteils verwendeten Baukoordinatenwerte sind.

7. Verfahren nach einem der vorhergehenden Ansprüche,
**dadurch gekennzeichnet, dass**
die die Sensor-Werte im Bauteil (1) lokalisierenden Koordinatenwerte zumindest teilweise bei der Erfassung der Sensor-Werte neu gewonnen werden.

8. Verfahren nach Anspruch 7,
**dadurch gekennzeichnet, dass**
die Gewinnung der die Sensor-Werte im Bauteil (1) lokalisierenden Koordinatenwerte durch eine flächige Erfassung entweder der gesamten Bauebene oder eines den Bauteilbereich umfassenden Ausschnittes der Bauebene erfolgt.

9. Verfahren nach einem der vorhergehenden Ansprüche,
**dadurch gekennzeichnet, dass**
eine Koordinatenzuordnung der Sensorwerte über Belichtungs- oder Scannerdaten erfolgt.

10. Verfahren nach einem der vorhergehenden Ansprüche,
**dadurch gekennzeichnet, dass**
die Erfassung zumindest eines Teils der Sensor-Werte bezogen auf den Zeitpunkt des Energieeintrages zeitlich verzögert erfolgt und die durch Visualisieurng dargestellten Werte einen zeitlichen Verlauf des thermischen Verhaltens des Schmelzbereiches zeigen (Sampling-Verfahren).

11. Verfahren nach einem der vorhergehenden Ansprüche,
**dadurch gekennzeichnet, dass**
bezogen auf den Energieeintrag an ein und derselben Stelle der Bauteilebene eine Mehrzahl von Sensorwerten mit unterschiedlichen zeitlichen Abstand vom Energieeintrag ermittelt werden.

12. Vorrichtung zur Durchführung des Verfahrens nach einem der Ansprüche 1 - 11, nämlich Laserschmelzvorrichtung, in welcher ein Bauteil (1) durch aufeinanderfolgendes Verfestigen einzelner Schichten (2) aus verfestigbarem Baumaterial (4) durch Einwirkung einer Strahlung (3), insbesondere Laserstrahlung durch Aufschmelzen des Baumaterials (4) hergestellt wird, wobei der durch einen punkt- und/oder linienförmigen Energieeintrag erzeugte Schmelzbereich (5) durch eine Sensorvorrichtung (6, 11, 12, 18) hinsichtlich seiner Abmessung, Form und/oder Temperatur erfassbar ist und daraus Sensorwerte zur Evaluierung einer Bauteilqualität herleitbar sind,
**gekennzeichnet durch**
- eine Speichereinrichtung, in welcher die zur Evaluierung der Bauteilqualität erfassten Sensorwerte zusammen mit den Sensor-Werten im Bauteil (1) lokalisierenden Koordinatenwerten abspeicherbar sind und
- eine Visualisierungseinrichtung (29), die mit dem Speicher verbunden ist und **durch** welche die abgespeicherten Sensorwerte in einer zwei- oder mehrdimensionalen farblichen Darstellung bezogen auf ihren Erfassungsort im Bauteil (1) darstellbar sind.

13. Vorrichtung nach Anspruch 12,
**dadurch gekennzeichnet, dass**
die visualisierten Sensorwerte den Grad der Aufschmelzung des Baumaterials (4) bei dessen Verfestigung zeigen.

14. Vorrichtung nach Anspruch 12 der 13,
**dadurch gekennzeichnet, dass**
die visualisierten Sensorwerte die Temperatur oder einen Temperaturverlauf im Schmelzepool des Baumaterials (4) bei dessen Verfestigung zeigen.

15. Verwendung einer Visualisierungseinrichtung zur zwei- oder mehrdimensionalen Darstellung von Bauteilbereichen von generativ durch Strahlungseinwirkung auf pulverartiges Baumaterial (4) hergestellten Bauteilen (1), insbesondere Bauteilinnenbereichen hinsichtlich ihrer Bauteilqualität, die aus einen Schmelzepool des Baumaterials beim Energieeihtrag oder zeitnah nach dem Energieeintrag charakterisierenden Sensorwerten bei der strahlungsinduzierten Verfestigung des Pulvermaterials ermittelt wird, wobei den Sensorwerten Bauteilkoordinaten zugeordnet werden, die dem generativen Bauvorgang zugrundegelegt werden oder während des generativen Bauvorganges Bauteil-Schichtbezogen ermittelt werden und wobei Abweichungen der Bauteilqualität von einem vorgebbaren Sollwert durch Farbunterschiede, Grauabstufungen, Transparenzgrad und/oder Flächenstrukturunterschiede dargestellt werden.

## Claims

1. A method for producing a three-dimensional component (1) by a laser melting process, in which the component (1) is produced by successive solidification of individual layers of building material (4) which can be solidified by the action of radiation, by fusing the building material (4), wherein the melt region (5) created by a point-and/or line-shaped energy influx is captured by a sensor device (6, 11, 12, 18) and sensor values for evaluating component quality are derived therefrom,
**characterized in that**
the sensor values captured for evaluating the component quality are stored together with the coordinate values localizing the sensor values in the component (1) and are displayed by means of a visualization apparatus (29) in a two-dimensional and/or multidimensional representation in respect of the capture location thereof in the component.

2. The method as claimed in claim 1,
**characterized in that**
sensor values of a component plane are displayed in the case of a 2D representation, which sensor values correspond to a layer (2) which is solidified by the action of radiation prior to a new deposition of building material (4).

3. The method as claimed in claim 1,
**characterized in that**
sensor values of a freely selectable component sectional plane are displayed in the case of a 2D representation, which plane extends at an angle to a layer successively solidified by the action of radiation.

4. The method as claimed in one of claims 1-3,
**characterized in that**
in the case of a two-dimensional and/or multidimensional representation only sensor values are displayed visually and/or highlighted which represent component regions which, compared to at least one definable intended degree of solidification or intended temperature value or intended density value, have a deviating, more particularly reduced, degree of solidification, temperature value or density value or exhibit deviations with respect to an intended energy influx or intended melt pool dimensions.

5. The method as claimed in one of the preceding claims,
**characterized in that**
in order to display the sensor values a sensor value representing an optimized value with respect to the building material is displayed in a first color, a first grayscale value, a first degree of transparency and/or with a first areal structure and values deviating upward or downward from this optimized value are displayed differently in terms of color, grayscale value, degree of transparency and/or in respect of an areal structure.

6. The method as claimed in one of the preceding claims,
**characterized in that**
the coordinate values localizing the sensor values in the component (1) at least in part are the build coordinate values used to produce the component.

7. The method as claimed in one of the preceding claims,
**characterized in that**
the coordinate values localizing the sensor values in the component (1) at least in part are newly obtained when capturing the sensor values.

8. The method as claimed in claim 7,
**characterized in that**
the coordinate values localizing the sensor values in the component (1) are obtained by an areal capture of either the whole build plane or a section of the build plane comprising the component region.

9. The method as claimed in one of the preceding claims,
**characterized in that**
coordinates are assigned to the sensor values by means of exposure data or scanner data.

10. The method as claimed in one of the preceding claims,
**characterized in that**
the capture of at least some of the sensor values takes place with a time delay with respect to the time of the energy influx and the values displayed by the visualization exhibit a time profile of the thermal behavior of the melt region (sampling method).

11. The method as claimed in one of the preceding claims,
**characterized in that**
in respect of the energy influx a plurality of sensor values with different time lags from the energy influx are established at one and the same point in the component plane.

12. A device for carrying out the method as claimed in one of claims 1-11, namely a laser melting device, in which a component (1) is produced by successive solidification of individual layers (2) of building material (4) that can be solidified by the action of radiation (3), more particularly laser radiation, by fusing the building material (4), wherein the melt region (5) created by a point- and/or line-shaped energy influx can be captured by a sensor device (6, 11, 12, 18) in respect of its dimensions, shape and/or temperature and sensor values for evaluating component quality can be derived therefrom,
**characterized by**
- a storage apparatus, in which the sensor values captured for evaluating the component quality can be stored together with the coordinate values localizing sensor values in the component (1), and
- a visualization apparatus (29), which is connected to the storage medium and by means of which it is possible to display the stored sensor values in a two-dimensional or multidimensional colored representation in respect of the capture location thereof in the component (1).

13. The device as claimed in claim 12,
**characterized in that**
the visualized sensor values show the degree of fusion of the building material (4) when the latter solidifies.

14. The device as claimed in claim 12 or 13,
**characterized in that** the visualized sensor values show the temperature or a temperature profile in the melt pool of the building material (4) when the latter solidifies.

15. The use of a visualization apparatus for two-dimensional or multidimensional representation of component regions of components (1) produced in generative fashion by the action of radiation on powder-like building material (4), more particularly of component interior regions, in respect of the component quality thereof, which representation is established from sensor values characterizing a melt pool of the building material during the energy influx or shortly after the energy influx during the radiation-induced solidification of the powder material, wherein component coordinates are associated with the sensor values, which coordinates are based on the generative construction or are established relating to the component layer during the generative construction and wherein deviations of the component quality from a predeterminable intended value are displayed by color differences, grayscale gradations, the degree of transparency and/or differences in the areal structure.

## Revendications

1. Procédé de fabrication d'un composant tridimensionnel (1) par un procédé de fusion au laser, dans lequel le composant (1) est obtenu par durcissements successifs de couches individuelles constituées de matériau de construction (4) durcissable par action d'un rayonnement par fusion du matériau de construction (4), dans lequel la zone de fusion (5) générée par application ponctuelle et/ou linéaire d'énergie est détectée par un dispositif détecteur (6, 11, 12, 18) et des valeurs de détecteur sont déduites de celle-ci pour évaluer une qualité de composant,
**caractérisé en ce que**
les valeurs de détecteur détectées du composant sont stockées en association avec des valeurs de coordonnées localisant les valeurs de détecteur dans le composant (1) et sont représentées au moyen d'un dispositif de visualisation (29) dans une représentation bidimensionnelle et/ou multidimensionnelle par rapport à leur emplacement de détection dans le composant.

2. Procédé selon la revendication 1, **caractérisé en ce que**,
lors d'une représentation 2D, des valeurs de détecteur d'un plan de composant sont représentées, celles-ci correspondant à une couche (2) qui est durcie par action d'un rayonnement avant la nouvelle application de matériau de construction (4).

3. Procédé selon la revendication 1,
**caractérisé en ce que**,
lors d'une représentation 2D, on représente des valeurs de détecteur d'un plan de composant pouvant être sélectionné librement qui s'étend en formant un certain angle par rapport à une couche durcie successivement par action d'un rayonnement.

4. Procédé selon l'une quelconque des revendications 1 - 3, **caractérisé en ce que**
lors d'une représentation bidimensionnelle et/ou multidimensionnelle, on représente et/ou on met en surbrillance uniquement des valeurs de détecteur qui représentent des régions du composant présentant une valeur de température ou une valeur de densité présentant un écart, notamment réduites par rapport à au moins un degré de durcissement nominal pouvant être défini ou une valeur de température nominale pouvant être définie ou une valeur de densité nominale pouvant être définie, ou des écarts par rapport à une application d'énergie nominale ou à des mesures de masse fondue nominale.

5. Procédé selon l'une quelconque des revendications précédentes, **caractérisé en ce que**,
pour représenter les valeurs de détecteur, on représente une valeur de détecteur représentant une valeur optimisée par rapport au matériau de construction avec une première couleur, un premier niveau de gris, un premier degré de transparence et/ou une première structure de surface et on représente de manière différente, par rapport à ladite valeur optimisée, les valeurs s'écartant vers le bas ou vers le haut de manière colorée, par une valeur de gris, par un degré de transparence et/ou par une structure de surface.

6. Procédé selon l'une quelconque des revendications précédentes, **caractérisé en ce que** les valeurs de coordonnées localisant les valeurs de détecteur dans le composant (1) sont au moins en partie les valeurs de coordonnées de construction utilisées pour fabriquer le composant.

7. Procédé selon l'une quelconque des revendications précédentes, **caractérisé en ce que**
les valeurs de coordonnées localisant les valeurs de détecteur dans le composant (1) sont au moins partiellement de nouveau obtenues lors de la détection des valeurs de détecteur.

8. Procédé selon la revendication 7, **caractérisé en ce que**
l'obtention des valeurs de coordonnées localisant les valeurs de détecteur dans le composant (1) s'effectue par détection bidimensionnelle soit de la totalité du plan de construction soit d'une section du plan de construction englobant la région du composant.

9. Procédé selon l'une quelconque des revendications précédentes, **caractérisé en ce que**
une affectation de coordonnées aux valeurs de détecteur s'effectue par l'intermédiaire de données d'clairement ou de balayage.

10. Procédé selon l'une quelconque des revendications précédentes, **caractérisé en ce que**
la détection d'au moins une partie des valeurs de détecteur s'effectue de manière retardée dans le temps par rapport à l'instant de l'application d'énergie et les valeurs représentées par visualisation indiquent une évolution temporelle du comportement thermique de la région de fusion (procédé d'échantillonnage).

11. Procédé selon l'une quelconque des revendications précédentes, **caractérisé en ce que**,
par rapport à l'application d'énergie en un seul et même point du composant, une pluralité de valeurs de détecteur sont obtenus à des intervalles de temps différents par rapport à l'application d'énergie.

12. Dispositif destiné à mettre en oeuvre le procédé selon l'une quelconque des revendications 1 - 11, lequel est notamment un dispositif de fusion au laser, dans lequel un composant (1) est fabriqué par durcissements successifs de couches individuelles (2) constituées de matériau de construction (4) durcissable par action d'un rayonnement (3), notamment d'un rayonnement laser, par fusion du matériau de construction (4), dans lequel la région de fusion (5) générée par une application d'énergie ponctuelle et/ou linéaire peut être détectée au moyen d'un dispositif détecteur (6, 11, 12, 18) en ce qui concerne sa dimension, sa forme et/ou sa température et des valeurs de détecteur peuvent en être déduites pour évaluer une qualité du composant, **caractérisé par**
- un dispositif à mémoire dans lequel peuvent être stockées les valeurs de détecteur détectées pour évaluer la qualité du composant en association avec des valeurs de coordonnées localisant les valeurs de détecteur dans le composant (1), et
- un dispositif de visualisation (29) qui est connecté à la mémoire et par l'intermédiaire duquel les valeurs de détecteur stockées peuvent être représentées dans une représentation colorée bidimensionnelle ou multidimensionnelle par rapport à leur emplacement de détection dans le composant (1).

13. Dispositif selon la revendication 12, **caractérisé en ce que**
les valeurs de détecteur visualisées indiquent le degré de fusion du matériau de construction (4) lors de son durcissement.

14. Dispositif selon la revendication 12 ou 13, **caractérisé en ce que**
les valeurs de détecteur visualisées indiquent la température ou une évolution de la température dans la masse fondue du matériau de construction (4) lors de son durcissement.

15. Utilisation d'un dispositif de visualisation pour la représentation bidimensionnelle ou multidimensionnelle de régions de composants pour des composants (1) fabriqués de manière générative par action d'un rayonnement sur un matériau de construction (4) de type poudre, notamment de zones internes de composants en ce qui concerne leur qualité de composant, celle-ci étant déterminée à partir d'une masse fondue du matériau de construction lors de l'application d'énergie, ou de valeurs de détecteur caractérisant l'évolution temporelle après l'application d'énergie lors du durcissement induit par le rayonnement du matériau en poudre, dans lequel des coordonnées du composant sont associées aux valeurs de détecteur lesquelles coordonnées sont à la base du processus de construction génératif ou sont obtenues pendant le processus de construction génératif par rapport aux couches du composant et dans lequel les écarts de qualité du composant par rapport à une valeur nominale prédéterminée sont représentés par des différences de couleur, des niveaux de gris, un degré de transparence et/ou des différences de structure de surface.
